# EUROPEAN PATENT SPECIFICATION

(11) **EP 0 675 154 B1**
(45) Date of publication and mention of the grant of the patent: **07.06.2000**
(21) Application number: 95109066.1
(22) Date of filing: 27.10.1992
(51) Int. Cl.: C08J 5/18, B32B 27/34, B29C 55/12

(54) **Oriented film easy to split and method of producing the same**
Orientierter trennbarer Film und Verfahren zu seiner Herstellung
Feuille orientée facilement déchirable et procédé pour sa fabrication

(30) Priority: 28.10.1991 JP 30842791; 31.10.1991 JP 31367591
(43) Date of publication of application: 04.10.1995
(62) Divisional of application: 92309827.1
(73) Proprietor: IDEMITSU PETROCHEMICAL CO. LTD., Tokyo 100 (JP)
(72) Inventor: Takashige, Masao, c/o Idemitsu Petro. Co., Ltd., Himeji-shi, Hyogo-ken (JP); Hayashi, Takeo, c/o Idemitsu Petro. Co., Ltd., Himeji-shi, Hyogo-ken (JP); Utsuki, Katsumi, c/o Idemitsu Petro. Co., Ltd., Himeji-shi, Hyogo-ken (JP); Iwamoto, Takehiro, c/o Idemitsu Petro. Co., Ltd., Himeji-shi, Hyogo-ken (JP)
(74) Representative: Jackson, Peter Arthur

(56) References cited:
- EP-A- 0 288 972
- EP-A- 0 318 964
- EP-A- 0 475 720
- FR-A- 2 327 060
- PATENT ABSTRACTS OF JAPAN vol. 005, no. 123 (M-082) 8 August 1981 & JP-A-56 062 129 (TOYOBO CO LTD) 27 May 1981
- PATENT ABSTRACTS OF JAPAN vol. 015, no. 080 (C-0810) 25 February 1991 & JP-A-02 302 467 (TEIJIN LTD) 14 December 1990
- DATABASE WPI Week 2392, Derwent Publications Ltd., London, GB; AN 92-187600 & JP-A-4 115 926 (SUMITOMO BAKELITE CO) 16 April 1992
- DATABASE WPI Week 3192, Derwent Publications Ltd., London, GB; AN 92-253426 & JP-A-4 169 231 (SUMITOMO BAKELITE CO)

## Description

The present invention is related to a film easy to split and a production method thereof, e.g. a base film for the bag to pack foods, medicines, industrial products and so on.

In recent years, films such as linear chain low density polyethylene (L-LDPE) have been widely used for a seal base film (sealant) of the bag to pack foods, medicines and so on. However, this L-LDPE film was safe to pack contents because the seal strength was excellent, but on the other hand, because a split resistance was too big, it was difficult to cut the film straight along a predetermined direction when opening up. In consideration of these problems, various inventions have been proposed to give the film features of ease to split and to be cut straight.

Examples: (a) a laminated film using a uniaxial oriented film for a middle layer film (Japanese Patent Application Publication No. 58-38320 bulletin, Japanese Patent Application Publication no. 55-31725 bulletin); (b) a laminated film made easier to split by being given a minute blemish to the surface thereof; (c) a (laminated) film with a tape for the opening attached to an opening part; and so on.

In the laminated film (a) mentioned above, because one layer is added as the middle layer film, the material cost and the processing cost to laminate films on top of one another increase. The uniaxial oriented film is used as a middle layer film but its use does not contribute to the strength any more. In the laminated film (b), even if the ease to open can be improved by putting minute blemishes on the film, the ease to cut straight is under control of the feature of the base material itself. Even if the blemishes put on the surface are few, there is fear of decreasing the strength. As for the film (c), because the tape for the opening is additionally used, the cost becomes higher, which may cause the decline of the productivity.

Also, conventionally, the plastic film was heat-treated to fix a film molecular orientation after biaxially oriented by Tubular method for the purpose of getting stability of the dimension. In the heat-treatment, when a film of tubular nylon 6 folded flatly is heat-treated by the tenter method, the upper and lower films are melted by heat and stick to each other and thereafter it is impossible to separate into two sheets, whereby the film processed by means of prior art was unusable as a product. These problems are conspicuously seen when a plastic film is a crystalline thermoplastic resin film like a polyamide. Formerly, to solve the technical problems, one improved tenter method (Japanese Patent Application Publication no. 46-15439 bulletin) was proposed, wherein the film folded flat after being biaxially oriented in tubular situation is separated into two films by cutting both edges in the direction of the width, and they are introduced into the tenter in the condition where the both edges of each film are held with clips to keep a certain clearance between each film. Incidentally, adopting the tubular method, where the tubular film formed into a bubble shape by compression of air is heat-treated, can solve the problem of sticking of films by heat. However, though in the heat treatment based on the above mentioned improved tenter method, the films do not stick to each other, the bowing phenomenon (a phenomenon where a delay in the orientation at the central part occurs compared with both side parts) conspicuously occurred. Though lowering a heat treatment temperature naturally decreases the bowing ratio, it brings about a new problem of increasing the shrinkage percentage in the heat treatment of the boil, retort and so on. The purpose of the present invention is to provide an oriented film easy to split which features the excellent ease to split, the ease to cut straight and the enough impact strength and also to provide a production method of the oriented film easy to split to obtain these features effectively.

EP-A-0475720 and JP-A-56062129 disclose a process for making a biaxially oriented film, comprising the steps of dissolving a mixture comprising nylon and MXD6; extruding the mixture to obtain a raw film; and stretching the film at elevated temperature.

According to a first aspect of the present invention, a method of producing a biaxially oriented film easy to split is defined in claim 1.

According to a second aspect of the present invention, a method of producing a biaxially oriented film easy to split is defined in claim 2.

(A-a) In a case that nylon 66 (Ny66) is used as an example of Ny.

The weight ratio between Ny66 and MXD6 is for example, 40-85:60-15, 50-80:50-20 is more desirable. When the ratio of MXD6 is smaller than 15, the ease to split and the ease to cut straight tend to become worse. Oppositely, when the ratio of MXD6 is more than 60, the practicality becomes poor because the impact strength falls substantially. On the other hand, Ny 66 is contained for the sake of heat resistance of the oriented film easy to split. The production of the oriented film easy to split is conducted by first mixing Ny66 and MXD6 at weight ratio of 40-85:60-15, fusing and extruding it, and orienting a raw film obtained by cooing down at the magnification ratio of 2.8 and over in the directions of MD and TD. Incidentally, though the raw film is oriented at the magnification ratio of 2.8 and over, the desirable ratio is 3.0 and over. It is because when the orientation ratio is smaller than 2.8 times, the ease to split and the ease to cut straight become worse. The impact strength also decreases, so there is a problem in practical use. Incidentally, the term "orientation" used already several times means a simultaneous biaxial orientation based on the tubular method. Besides, it is possible to add an addition to the oriented film easy to split based on the present invention if necessary. Available additions are anti-blocking pill (inorganic filler and so on), water repeller (ethylene-dis-stearic acid ester and so on), lubricant (stearic acid calcium and so on) and so on. Incidentally, the oriented film easy to split according to the present invention can laminate with other films.

(A-b) In a case that nylon 6-66 copolymer (Ny6-66) is used as an example of Ny.

Though the weight ratio between Ny6-66 and MXD6 is, for example, 40-85:60-15, 50-80:50-20 is more desirable. When the ratio of MXD6 is out of the above-mentioned range, the characteristic of MXD6 is the same as the case of Ny66 which was already explained in (A-a) column. Ny6-66 is contained for the purpose of giving the oriented film easy to split shrinkage. The production condition of this oriented film easy to split is the same as the case that Ny66 is used. Incidentally, like the case of Ny66 mentioned above, it is possible to use this oriented film easy to split, too, as one film in a laminated film easy to split having more than one layers of films. The laminated film easy to split comprising of an oriented film easy to split as the 1st layer film, a film of various kinds as the 2nd layer film, and a sealant film as the 3rd layer film is taken for example. Incidentally, the composition of the 1st layer film and the 2nd layer film can be reversed. Biaxially oriented, uniaxial oriented or non-oriented film made of PET (poly ethylene terephthalate), EVOH (ethylene-vinyl acetate copolymer saponification one), PVA (polyvinyl alcohol), PP (polypropylene), PVDC (polyvinylidene chloride), HDPE (high density polyethylene), PS (polystyrene) and so on are suitable material for the basic film as the 2nd layer film. In addition, of course, it is possible to use a metallic film like aluminum foil as the base film, too. For the material for the sealant film as the 3rd layer film, L-LDPE (linear chain low density polyethylene), LDPE (low density polyethylene), HDPE (high density polyethylene), EVA (ethylene-vinyl acetate copolymer), PB (polybutene-1), CPP (cast polypropylene), ionomer, PMMA (poly methyl methacrylate) and so on are suitable and the mixture of these can be used as the material of the sealant film, too. As for the laminate method in the laminated film easy to split, in which more than one films are laminated on top of one another, an extrusion laminate, a hot melt laminate, a dry laminate, and a wet laminate are suitable.

(A-c) In a case that nylon 6 (Ny6) is used as an example of Ny.

Especially when it is used as the 1st layer of two layers and laminated with the 2nd layers of EVOH at the thickness ratio of 2:1-1:2.

In this case, the weight ratio of Ny6 and MXD6 in the 1st layer is 40-85:60-15 but 50-80:50-20 is more desirable. When MXD6 is out of the above-mentioned range, the characteristic is the same as the case that Ny66 is used explained in the column (A-2a). When laminating the layer comprising of EVOH, an oriented film easy to split can be expected to have the feature of gas barrier. The ethylene content of EVOH in the 2nd layer is, for example, 25-45 mol % but 29-38 mol % is more desirable. When the ethylene content is smaller than 25 mol %, the 2-layer forming is difficult. When it is bigger than 45 mol %, the gas barrier feature cannot be expected. As for the thickness ratio between the 1st layer and the 2nd layer, when the thickness of the 1st layer becomes smaller than half of the thickness of the 2nd layer, the ease to split which is the purpose of the present invention is lowered. Incidentally, on the condition of laminating the 1st layer and the 2nd layer as one, further laminating is optionally possible. (B) The method of producing the above-explained oriented film easy to split in the present invention comprises the steps of: producing a raw film by fusing and extruding a raw material mixture containing nylon (Ny) and polymeta-xylylene adipamide (MXD6) at the weight ratio of 40-85:60-15 from an extruder; orienting biaxially the raw film with an orientation ratio of 2.8 and over in MD direction and TD direction by the tubular method; folding the oriented film flat; and heat-treating the folded film as described above.
(B-a) Before the step of fusing and extruding by the extruder, an additional step of kneading the raw material mixture by fusing at the temperature of 300°C and under can be added.
   When additionally providing a process of kneading the raw material mixture by fusing at the temperature of 300°C and under, an excellent precision of the thickness can be gained. A kneading machine which is used in a manufacturing process of the fusion kneading of the raw material mixture can be optionally selected, but a biaxial kneading machine is desirable. Also, the temperature of fusion in the case of kneading by fusion should be kept at 300°C and under because the fabricability in orientation is lowered at the temperature higher than 300°C. Also, it will lower an impact strength and a ease to cut straight of the oriented film ease to split.
(B-b) In the step of biaxial orientation using the tubular method, temperature should be controlled along the circumference direction of the bubble-like raw film so that a heating temperature in the side part in the width direction when folding the bubble-like raw film may be lower than that in other parts which will be used as a product later. By controlling a heating condition at the time of the biaxial orientation, the bowing phenomenon which is in the reverse direction of bowing phenomenon which occurs in the latter heat treatment process is caused intentionally, by which the reduction of bowing ratio is achieved. To expect such an operation, it is necessary to control temperature of the heater to heat the side part in the width direction when folding the bubble-like raw material film and the heater to heat other parts which will be used as a product later. The temperature of the heater to heat the side part of the direction of the width of the bubble-like raw film is made to be 10-100°C, desirably, 20-90°C lower than the average temperature of all the heaters. Also, the temperature of the heater to heat the other part which is used as a product is made to be 10-100°C, desirably 20-90°C higher than the average temperature of all the heaters. Incidentally, when the temperature difference of each heater is less than 10°C, the bowing phenomenon in reverse direction does not reach the expected condition and when the temperature difference of each heater is more than 100°C, the shape of bubble does not become stable. In order to separately control the temperature of the heater to heat the side part of the direction of the width when folding a film and the heater to heat the other part which is used as a product, for example, two heaters to heat the side part in the width direction of the bubble-like raw film, and two heaters to heat the other part which is used as a product, need to be provided. Also, because the temperature inclination covering all the circumference of the bubble-like raw film should be as gentle as possible, it is desirable to prepare more than four heaters to improve the heat control over the film. Moreover, it is desirable to heat the bubble-like raw film so that the heating temperature at the end in the film width direction may be lowest and that at the center part of other parts which is used as a product may be highest. But, the heat treatment of the raw film should be done at the temperature lower than the melting point of the film (220°C).
(B-c) The heat treatment of the film folded flatly should be done through two steps; the first heat treatment process at the temperature of 120-190°C by the tubular method and the second heat treatment process at the temperature of 190-220°C by the tenter method.

Because the 2-stage heat treatment can check bowing, the ease to cut straight along the width direction at an optional place of the film obtained as a product is improved. Also, the adhesion and stickiness by fusion which often occurred in the process of heat treatment can be prevented. The first heat treatment by the tubular method is done with the temperature range of 120-190°C for example, but 140-190°C is desirable. When the temperature is lower than 120°C, a curling of the film is too big, so that both side parts are difficult to be held. Also, when the temperature is higher than 190°C, because films stick to each other by fusion, it is impossible to separate such a stuck film into two sheets after the 1st heat treatment process. Incidentally, it is desirable that the heat treatment time is one second and over. When it is under 1 second, a heat fixation tends to be insufficient. Though there is no upper limit of heat treatment time, the longer the treatment time becomes, the larger orientation equipment is required, which makes the cost higher. Therefore, the heat treatment time should normally be between 1-30 seconds. In the first process of heat treatment, the film relaxation ratio is set to be 15% and under (in MD direction and/or TD direction), and desirably, it should be set to be 10% and under. By giving the film the heat treatment in the condition of relaxing it a little, a crystallinity of the film is improved and the reduction of relaxation ratio is achieved and consequently, the film with dimensional stability is obtained. In the heat treatment by the tubular method, the bowing ratio is 0. Moreover, because a shrinkage stress falls, a bowing ratio caused by the second heat treatment process declines. In other words, an isotropy of the material nature in the width direction of the film reduces and as a result, the ease to cut straight is improved further.

The 2nd process of the heat treatment by the tenter method is done with the temperature range of 190-220°C, but it should be 190-215°C desirably. When it is lower than 190°C, a shrinkage ratio becomes big and isn't desirable. Also, when it is higher than 220°C, a fusion among films occurs and it is impossible to roll them as products of two sheets. Incidentally, the condition of heat treatment time is the same as the case of the heat treatment of the above-mentioned 1st process. In the 2nd process of heat treatment, the film relaxation ratio is set to be 15% and under, but to be 10% and under desirably it is also desirable that after the first step of heat treatment, the both ends of the width direction of the film are cut open to separate them into two and that the 2nd process of heat treatment should be done with air contained between the both films. Moreover, as for the heat treatment process of the film folded flat, it is possible to implement the heat treatment of the 1st process based on the tenter method instead of above-mentioned tubular method. The heat treatment temperature in this case is, e.g. 120-190°C, but 140-190°C is desirable. When lower than 120°C, two sheets of film are fused in the 2nd process of the heat treatment and the stability with the ease to cut straight is lowered. On the other hand, when higher than 190°C, in the first process of the heat treatment, the fusion of two sheets occurs. Incidentally, the condition of the relaxation ratio of the film and the heat treatment time by this tenter method are the same as in the case of the tubular method.

In the drawings:

Figure 1 is a schematic diagram of an equipment used in the production method of the oriented film easy to split.

Figures 2 and 3 are schematic views which show an equipment of another production method for the oriented film easy to split.

Figure 4 is a plane cross sectional view which shows a heating condition of heaters used in the production method of the oriented film easy to split.

Figure 5 is a plane cross sectional view which shows a folded bubble in the production method for the oriented film easy to split.

Figure 6 is a schematic diagram which shows a roller with grooves used in the production method for the oriented film easy to split.

Figure 7 is a side-view which shows a bowing phenomenon in the reversed direction during the biaxial orientation.

Figure 8 is a front view which shows a bowing phenomenon in the reversed direction during the biaxial orientation.

Figure 9 is a front view which shows a measuring method of the bowing ratio.

Figure 10 is a view which shows a way of evaluating the ease to cut straight.

Figure 11 is a schematic diagram of an equipment used in another production method for the oriented film easy to split.

Figure 12 is a front view which shows a measuring method of the bowing ratio in the another production method.

### Experimental example 1

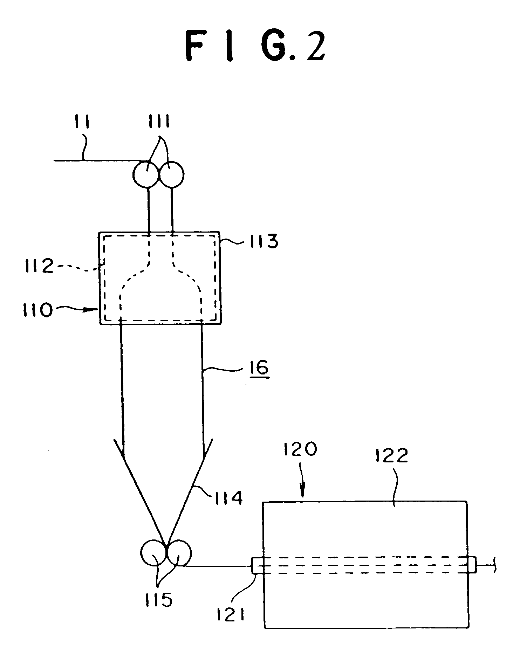

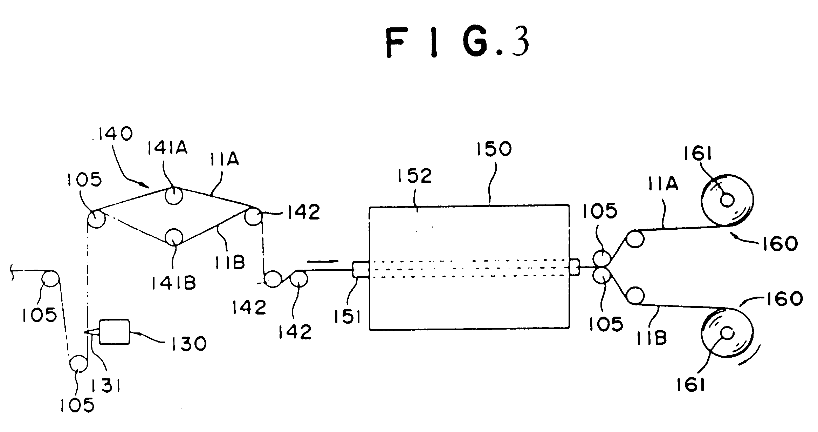

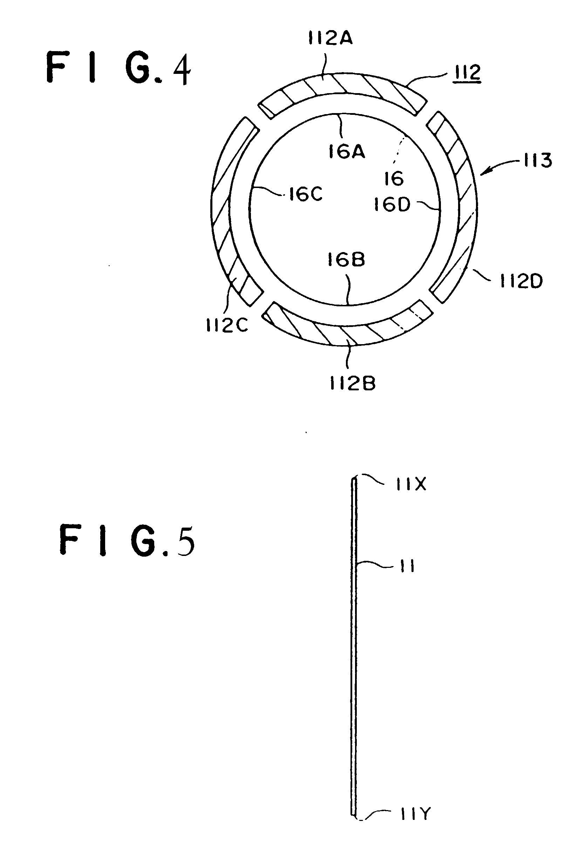

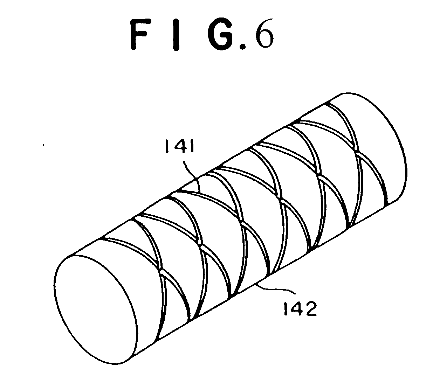

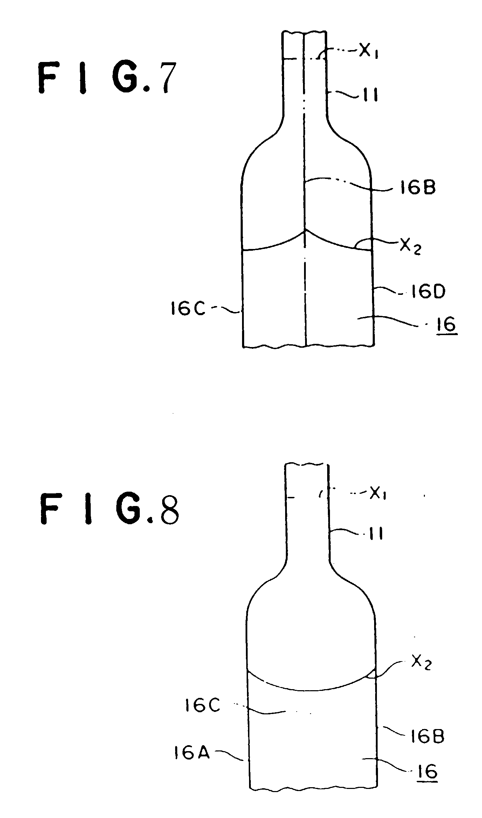

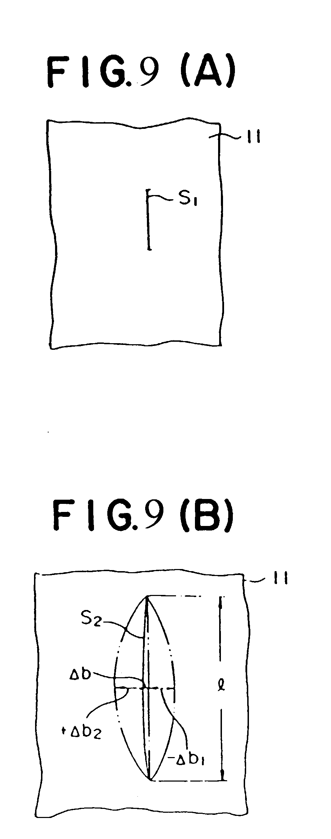

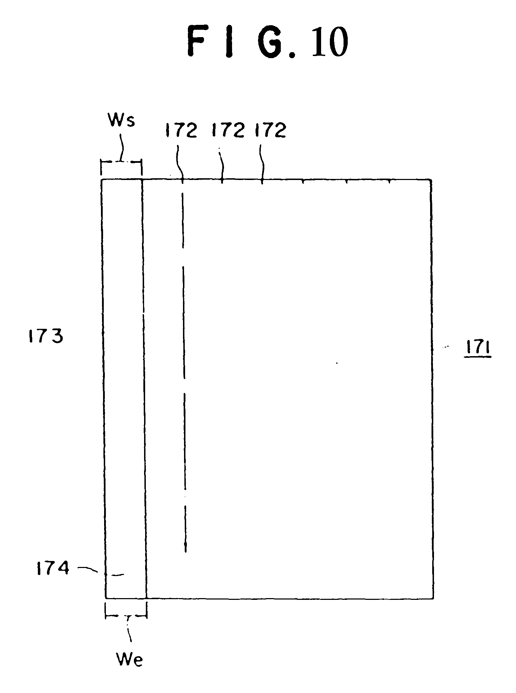

The manufacture equipment used in the experimental examples 1-7 is explained with the drawings. As shown in Figures 2 and 3, this manufacture equipment is equipped with the following: equipment 110 to biaxially orient raw film 11 by tubular method; first heating equipment 120 to thermally process this film 11 by Tenter method; trimming equipment 130 to cut both side parts of the direction of the width of this film 11 and separate it in to two sheets of films 11A and 11B; equipment 140 to make air intervene between films 11A and 11B; 2nd heating equipment 150 to keep both side parts of both of films 11A and 11B by Tenter method and to thermally treat; and winder 160 for films 11A and 11B processed by heat treatment. Biaxial orientation equipment llOis provided with the following: a pair of 1st pinch rollers 111 which was placed above; heating equipment 113 provided with heater 112 to heat raw film 11; V-shape guide board 114 to fold film 11 flat; and a pair of 2nd pinch rollers 115 placed the bottom of guideboard 114. Heater 112 of this heating equipment 113 consists of four heaters 112A-112D which is arranged along the surface of the periphery of bubble 16 closely as shown in Figure 4. Among these heaters 112A-112D, a pair of heaters, 112A and 112B, which are on opposite each other, are made to be a heater to heat parts 16A and 16B which will be side parts 11X,11Y of the direction of the width (see Figure 5) of film 11, when bubble 16 is folded flat. Also, a pair of other opposite heaters 112C,112D are made to be heaters to heat parts 16C,16D which are equivalent to the product of bubble 16. It is possible to choose an infrared ray heater and so on as these heaters 112A-112D optionally. First heating equipment 120 is provided with Tenter 121 to keep both side parts of the direction of the width 11X,11Y of film 11 folded flat, and hot blast stove 122 to heat film 11. Trimming equipment 130 has blade 131 to separate flat film 11 into two films 11A and 11B. More than one guide rollers 105 are provided between this trimming equipment 130 and first heating equipment 120. Air intervention equipment 140 is composed of a pair of rollers 141A and 141B which were separately arranged up and down. Second heating equipment 150 is equipped with Tenter 151 to keep both side parts of films 11A and 11B in it, and hot blast stove 152 to heat films 11A and 11B. More than one guide rollers 142 (see Figure 6) which was provided with spiral ditches 141 is provided between this second heating equipment 150 and air intervention equipment 140. These guide rollers 142 with ditches, was processed by galvanizing with chrome after ditch processing. With this manufacture equipment, a biaxial orientation and the heat treatment was implemented in the following way. First, a compound which was a mixture of nylon 6(Ny6) and polymeta-xylylene adipamide (MXD6) at the weight ratio of 60:40 was fusion kneaded at 270°C in a extruder, and dissolved material is extruded from a die with diameter of 90mm in the form of circular cylinder, then, it was quickly cooled with water continuously and a raw film was made. Next, tubular film 11, which was heated with heating equipment 113 by biaxial orientation equipment 110 of tubular method as shown in Figures 2 and 3, was expanded into bubble 16 at fixed internal pressure and biaxial oriented in order to orient it to the direction of TD and to direction of MD with a difference of winding speed of upper and lower pinch rollers 111 and 115. Biaxially oriented bubble 16 was folded flat by guide board 114 and second pinch roller 115 and flat film 11 was made incidentally, the method of the pouring of air into film 11 for tubular method is optional (For example, refer to the No. TOKUKAISHO 64-71727 bulletin). When this heating equipment 113 heats, the temperature of heaters 112A and 112B which were arranged on the side parts 16A and 16B which become side parts 11X and 11Y of the direction of the width of bubble 16 was set to 280°C. On the other hand, the temperature of heaters 112C and 112D which were arranged to the side of 16C and 16D which were equivalent to the product of bubble 16 was set to 320°C. In this case, all the heater average temperature is 300°C. By heating and orienting under these conditions, as shown in Figures 7 and 8 straight line X1 which was drawn to direction of TD of film 11 before orienting shifts to the direction of MD, centered on parts 16C and 16D which are equivalent to the product of bubble 16 on orienting and bowing phenomenon shown by curve X2 occurs next, in the first step heat treatment with 1st heating equipment 120, while both side parts 11 X and 11 Y of the direction of the width of film 11 with Tenter 121 was held, heat treatment was implemented at 150°C with hot blast stove 122. Bowing conditions in the opposite direction which denies the bowing conditions at the time of the biaxial orientation occurs in this heat treatment. In case of this heat treatment, the relaxation ratio of film 11 was set to 5% (the direction of TD). By implementing a heat treatment in the condition that film 11 is rather relaxed, shrinkage percentage is reduced by increasing the crystallinity of film 11, and film 11 with good dimensional stability is obtained by this. Next, with trimming equipment 130, side parts 11X and 11Y of the direction of the width of this film 11 were cut with blade 131 and separated in to two films 11A and 11B. Incidentally, cutting of this film 11 can be implemented so as to cause partial fragment of a side part of the direction of the width by placing blade 131 rather inside from a fold part, or it may be implemented so as not to cause fragment of a side part of the direction of the width by placing blade 131 to the fold part of film 11. With a trimming at this step, it is possible to make trimming loss small in the following manufacturing process. Next, with air intervention equipment 140, films 11A and 11B is separately fed into the top and the bottom of rollers 141A and 141B so that air touches the inside of films 11A and 11B. Then, they are fed in order into roller 142 with ditch which is shown in Figure 18 and both films 11A and 11B was put together while air is kept between both films 11A and 11B. When this roller 142 with ditch is used as this, a condition of good contact between films 11A and 11B and the air is obtained through these ditches 141 so that it is possible to prevent fusion between films 11A and 11B effectively. Next, in the second step heat treatment with 2nd heating equipment 150, two films 11A and 11B in overlapped conditions were thermally treated at 210°C, while both side parts 11X and 11Y of direction of width was held by Tenter 151. Even in this heat treatment, bowing conditions in the opposite direction which further denies the bowing conditions at the time of the biaxial orientation occurred. As a result, each of bowing conditions in both directions kill each other, and the bowing ratio of films 11A and 11B becomes small. In the second step heat treatment, the relaxation ratio of films 11A and 11B was set to 5% (the direction of TD). Lastly, films 11A and 11B were wound with winding machine 160. In this experimental example, a stability of the forming of bubble 16 at the time of the biaxial orientation was evaluated. Besides, the bowing ratio of film 11 after orienting and that of films 11A and 11B after the second step heat treatment was measured. And then, ease to cut straight was measured and evaluated at the center part and side part in the direction of the width of films 11A and 11B after the second step heat treatment. Those results are shown in Tables 1 and 2. The bowing ratio is the value which is obtained by drawing marked line S1 with fixed width in the perpendicular direction to the direction of the movement at film 11 see Figure 9 (A)], measuring delay of marked line S2 Δb after the second step heat treatment and width 1 [see Figure 9 (B)], and calculating by (Δb/1) x 100%, as shown in Figure 9. Incidentally, in this experimental example, bowing in quantity of -Δb1 occurs first because of the bowing conditions in a biaxial orientation manufacturing process. Then, bowing with an opposite direction in total quantity of +Δb2 occurs in the first and second step heat treatment manufacturing processes. After all, Δb after the second step heat treatment is equivalent to Δb2-Δb1. The ease to cut straight was evaluated as follows: That is, as shown in Figure 10, break 172 is provided to film 171 with width of 20cm in interval Ws of 2cm, film 171 is torn up along these breaks 172, width We of side part 174 is measured in addition to film fragment 173, deviation a with original interval Ws is obtained as the following:$\text{α = [(WS - We)/Ws] x 100}$

This measurement was done to 10 sheets of film fragments 173. Evaluations in the column of ease to cut straight in Table 27 is a double circle for one whose average a(%) is less than ±10% (ease to cut straight is very good), a circle for one with ±10% ≤ α ≤ ±30% (ease to cut straight is good), and a cross for one whose α(%) is more than ±30% (ease to cut straight is poor). When α(%) is ±30% or more, it becomes difficult to cut film 18 straight. In the column of evaluation of ease to cut straight, a double circle means that both of ease to cut straight at the center part and the side part are better than a circle, a triangle shows that one of ease to cut straight at the center part or the side part is a cross, and a cross shows both of ease to cut straight at the center part and the side part are a cross. Incidentally, in the column for stability of forming of bubble, a circle shows that bubble bent diameter change is ±1% or less and that break and instability of bubble (vertical movement, shaking and so on) do not occur, a cross shows that break and instability of bubble (vertical movement, shaking and so on) occur so that the continuous forming of stability is difficult. Also, in the column of total evaluation, a double circle shows that the stability of the forming of bubble is a circle and bowing ratio after the second step heat treatment is less than 5%, and a cross shows that the stability of the forming of bubble is a cross or that the bowing ratio after the second step heat treatment is 5% or more.

### Experimental examples 2-7

The raw film with the composition which is shown in Table 1 was made with an extruder, as in experimental example 1, then, the films easy to split in each experimental example were made by biaxially orienting this film. At time of this orienting, the temperature of heaters 112Aand 112B which were arranged on sides 16A and 16B which become side parts 11X and 11Y of direction of width of bubble 16 of heating equipment 113 and the temperature of heaters 112C and 112D which was arranged to part 16C and 16D which is equivalent to product of bubble 16 were set as shown in Table 1. Next, the first and second step heat treatments were given to these films easy to split 11 at the temperature and the relaxation ratio which are shown in Table 26. While other conditions were the same as above experimental examples, films easy to split 11A and 11B which are obtained under the condition of each experimental example were obtained. These films easy to split which are obtained in condition of these experimental example 2-7 was evaluated from stability of the forming of bubble 16 at time of the biaxial orientation as experimental example 1. Also, the bowing ratio of film 11 after orienting and that of the film easy to split after the second step heat treatment were measured. Also, ease to cut straight was measured and evaluated at the center part and the side part of films 11A and 11B. Those results are shown in Tables 1 and 2.

### Control examples 1 - 6

The raw film with the composition which is shown in Table 1 was made with an extruder, as the experimental example 1, and the films in each control examples were made by biaxially orienting this film. At time of this orienting, the temperature of heaters 112A and 112B which were arranged on sides 16A and 16B which become side parts 11X and 11Y of direction of width of bubble 16 of heating equipment 113 and the temperature of heaters 112C and 112D which was arranged to part 16C and 16D which is equivalent to product of bubble 16 were set as shown in Table 1. Next, the first and second step heat treatments were given to these films at the temperature and the relaxation ratio which are shown in Table 1. While other conditions were the same as above experimental examples, films which are obtained under the condition of the control example 1-6 were obtained. These films which are obtained in condition of these control examples were evaluated from stability of the forming of bubble at time of the biaxial orientation as the experimental example 1. Also, the bowing ratio of film after orienting and that of the film after the second step heat treatment were measured. Also, ease to cut straight was measured and evaluated at the center part and the side part of films. Those results are shown in Tables 1 and 2.

### Consideration of the experimental examples 1-8 and the control examples 1 - 6

According to Tables 1 and 2, in the experimental examples 1-7, when raw film 11 is heated by the biaxial orientation, heating temperature at parts of 16A and 16B which become side parts 11X and 11Y of direction of width when folding bubble 16 was set to lower than a temperature of the heating of parts 16C and 16D which are equivalent to the product of film 11. And then, the temperature of a pair of heaters 112Aand 112B which was arranged on the side of parts 16A and 16B which becomes side parts 11X and 11Y of the direction of the width of bubble 16 of heaters was set 10-100°C lower than the average temperature (300°C) of all heaters. The temperature of another pair of heaters 112C and 112D which were arranged on the side of parts 16C and 16D which are equivalent to the product of bubble 16 was set 10-100°C higher than the average temperature of all heaters. Therefore, it was shown that bubble 16 at the time of the biaxially orientation was stable and that the final bowing ratio after the second step heat treatment became low. Therefore, according to this experimental example, it is possible to limit a bowing ratio small so that good ease to cut straight is gotten at either of the center part and the side part to the width of film easy to split. On the other hand, in the control examples 1 and 2, on the contrary to this invention of the experimental examples 1-7, heating temperature of parts 16A and 16B which become side parts 11X and 11Y of direction of width when folding bubble 16 was set higher than the heating temperature of parts 16C and 16D which are equivalent to the film product. Therefore, it was shown that the final bowing ratio after the second step heat treatment became high and that ease to cut straight was especially poor at the film side part. In the control example 3, temperature of a pair of heaters 112A and 112B which was arranged on side of parts 16A and 16B which becomes side parts 11X and 11Y of direction of width of bubble 16 was set more than 100°C higher than the average temperature (300°C) of all heaters. On the other hand, temperature of another pair of heaters 112C and 112D which were arranged on side of parts 16C and 16D which are equivalent to product of bubble 16 was set more than 100°C higher than the average temperature of all heaters. Therefore, the stability of bubble 16 was poor. In the control examples 4 and 5, a film does not have the composition of the film easy to split which is gotten in the condition of this invention. Therefore, an ease to cut straight was poor at both of the film center part and the side part. In the control example 6, a film doesn't have the composition of the film easy to split which is gotten in the condition of this invention. Moreover, when the film is heated by the biaxial orientation, heating temperature of parts 16A and 16B which become side parts 11X and 11Y of direction of width when folding bubble 16 is the same as the heating temperature of parts 16C and 16D which are equivalent to the film product. Therefore, it was shown that the final bowing ratio became high and that the ease to cut straight was poor at both of the film center part and the side part. Incidentally, in the experimental examples 1-8, heating equipment 113 may be composed, for example, by placing total of 10 heaters, two each to the parts 16A and 16B which becomes side parts 11X and 11Y of the direction of the width of bubble 16, three each to the parts 16C and 16C which are equivalent to the product of bubble 16. With this, the temperature control of a heating conditions of bubble 16 improves more and it is possible to smooth the temperature inclination over a film circumference. Also, in the experimental examples 1-8, for example, by adjusting the coil density of the infrared ray heater, it is possible to control heating temperature at parts 16A and 16B which become side parts 11X and 11Y of direction of width of bubble 16, and at parts 16C and 16D which are equivalent to product of bubble 16. Moreover, in the experimental examples 1-8, hot blast stoves 122 and 152 were provided at the first and second heating equipment 120 and 150, but, for example, an infrared ray heater and so on may be placed instead.

### Experimental example 9

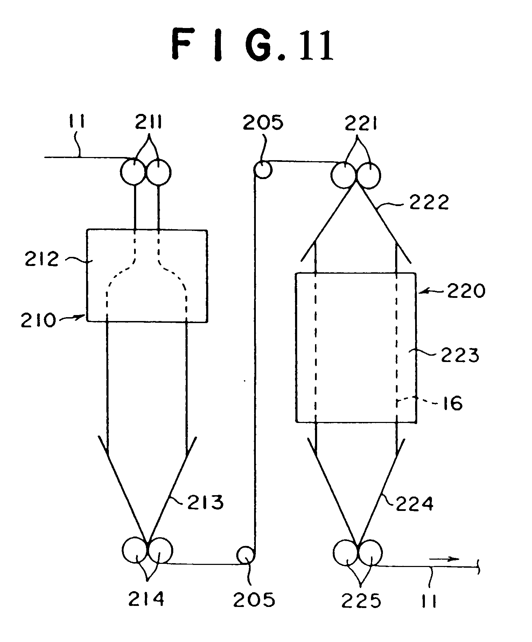

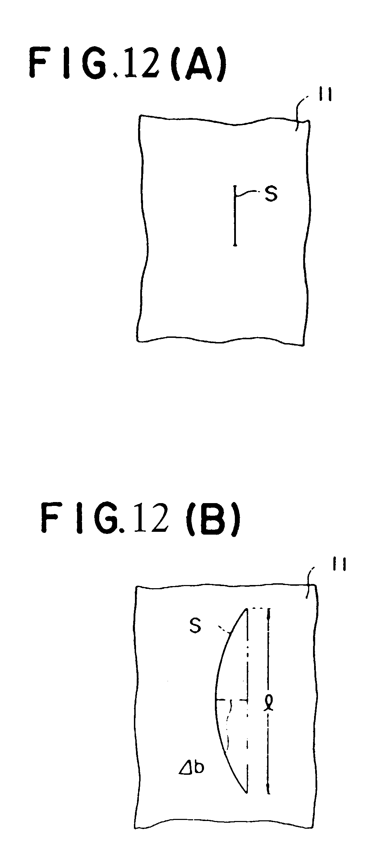

The manufacture equipment used in experimental examples 9-14 are explained with the drawing. As shown in Figure 11, this manufacture equipment is equipped with the following: equipment 210 to biaxially orient raw film 11 in tubular method; first heating equipment 220 to thermally process raw film 11 in tubular method; trimming equipment 130 same as experimental example 1-8 as show in Figure 4; air intervention equipment 140; second heating equipment 150 to thermally process in Tenter method; and winding machine 160. Biaxial orientation equipment 210 is provided with the followings: a pair of first pinch rollers 211 which were arranged above; heating furnace 212 to heat film 11; V-shape guide board 213 to fold film 11 flat; and a pair of second pinch rollers 214 which were arranged at the bottom of guide board 213. It is possible to choose an infrared ray heater and so on as heating equipment of heating furnace 212 optionally. First heating equipment 220 is equipped with following: a pair of first pinch rollers 221 which were arranged above; opposite V-shape guide board 222 which was installed from first pinch roller 221; hot blast stove 223 to heat film 11; V-shape guide board 224 to fold film 11 flat; and a pair of second pinch rollers 225 which were arranged at the bottom of guide board 224. Guide roller 205 is provided between this first heating equipment 220 and biaxial orientation means 210. With this manufacture equipment, the biaxial orientation and the heat treatment were carried out in the following way: First, mixture between nylon 6 (Ny6) and polymeta-xylylene adipamide (MXD6) at the weight ratio of 60:40 is fusion kneaded in an extruder at 270°C, then, dissolved material is extruded from a die with diameter of 90mm as a film in form of circular cylinder and it was quickly cooled with water and a raw film was made. Next, as shown in Figure 11, with biaxial orientation equipment 11 in tubular method, tubular film 11 which was heated with heating equipment 212 was biaxially oriented to the direction of TD by expanding into bubble 16 at fixed internal pressure and to the direction of MD with the difference in winding speed of upper and lower pinch rollers 211 and 214. Bubble 16 which was biaxially oriented was folded with guide board 213 and second pinch roller 214 and made into flat film 11. Next, with first heating equipment 220 in tubular method, heat treatment at 120°C was given to film 11 with hot blast stove 223. In this heat treatment, the relaxation ratio of film 11 was set to 0% (the directions of MD and TD). The first step heat treatment increases the crystallinity of film 11. Therefore, sliding efficiency between overlapped films becomes good and it is possible to prevent fusion. In addition, the first step heat treatment is carried out in tubular method, therefore, the bowing ratio of the first step heat treatment can be set to 0 and the final bowing ratio of film can be reduced. Next, as shown in Figure 3, these two films 11A and 11B were thermally treated at 210°C with second heating equipment 150 in Tenter method through trimming equipment 130 and air intervention equipment 140, while the both side parts of overlapped films 11A and 11B were held by Tenter 151. In the second step heat treatment, the relaxation ratio of films 11A and 11B was set to 10%. Lastly, films easy to split 11A and 11B were wound by winding machine 160. In this experimental example, stability of bubble 16 at time of first step heat treatment and the fusion condition of films 11A and 11B at the time of the second step heat treatment was evaluated.
Also, the bowing ratio of film 11 after first step heat treatment and after second step heat treatment were measured and then, the ease to cut straight of films 11A and 11B after the second step heat treatment was measured at the center part and the side part to the direction of the width and evaluated. Those results are shown in Tables 3 and 4. As show in Figure 12, bowing ratio is a value computed by drawing marked line S with fixed width to the perpendicular direction to the direction of the movement in film 11 [see Figure 12 (A)], measuring the delay Δb of marked line S after the second step heat treatment and width 1 [see Figure 12 (B)], and calculated by (Δb/1) x 100%. The ease to cut straight was evaluated like the experimental example 1

### Experimental examples 10-14

The raw film with the composition which is shown in Table 3 was made with an extruder to form film 11 which is then biaxially oriented and then subjected to a first step heat treatment in the tubular method and a second step heat treatment in Tenter method were carried out with the temperature and the relaxation ratio which are shown in Table 3. While other conditions were the same as experimental example, film easy to split which is gotten in the condition of experimental examples 10-14 was obtained. Film easy to split which is gotten in condition of these experimental examples 10-14 was evaluated from stability of bubble 16 at time of the first step heat treatment and fusion of films 11A and 11B at the time of the second step heat treatment like experimental example 9. Also, the bowing ratio of film 11 after first step heat treatment and after second step heat treatment were measured. And then, the straight line cut characteristic of films 11A and 11B after the second step heat treatment was measured at the center part and the side part and evaluated. Those results are shown in Tables 3 and 4.

### Control examples 7-11

The raw film with the composition which is shown in Table 3 was made with an extruder like example 9 of the above experimentals, then, the film in each control example was made by biaxially orienting this film next, to these films, the first step heat treatment in the tubular method and the second step heat treatment in Tenter method were carried out with the temperature and the relaxation ratio which are shown in Table 3.

While other conditions were the same as experimental example 9, film easy to split which is gotten in the condition of control examples 6-10 was obtained. Film easy to split which is gotten in condition of these control examples 6-10 was evaluated from stability of bubble at time of the first step heat treatment and fusion of films at the time of the second step heat treatment like experimental example 9. Also, the bowing ratio of film after first step heat treatment and after second step heat treatment were measured. And then, the straight line cut characteristic of the film after the second step heat treatment was measured at the center part and the side part and evaluated. Those results are shown in Tables 3 and 4.

### Consideration of the experimental examples 9-14 and the control examples 7-11.

According to Tables 3 and 4, in experimental examples 9-14, since the first step heat treatment in tubular method was given to film 11 at temperature of 120-190°C and the second step heat treatment was given in Tenter method at temperature of 190-220°C after that, it was shown that the stability of bubble 16 at the time of the first step heat treatment was good and the final bowing ratio after the second step heat treatment became low. Therefore, according to experimental examples 9-14, it is possible to limit the bowing ratio small, so that good ease to cut straight is gotten at both of the center part and the side part to the direction of the width of film 11. On the other hand, according to control example 7, the temperature of the first step heat treatment is above the temperature range which is gotten in the condition of this invention, therefore, it was shown that the stability of bubble became poor. According to control examples 8 and 9, without implementing the first step heat treatment in tubular method, only the second step heat treatment in Tenter method was given, fusion of films occurred during the second step heat treatment. Besides, the bowing ratio was high and the ease to cut straight was poor at the side part. According to control examples 10 and 11, the composition of the film to be used had a different composition of the film easy to split which is gotten in the condition of this invention. Therefore, an ease to cut straight was poor in either of the center part and the side part.

### Experimental example 15

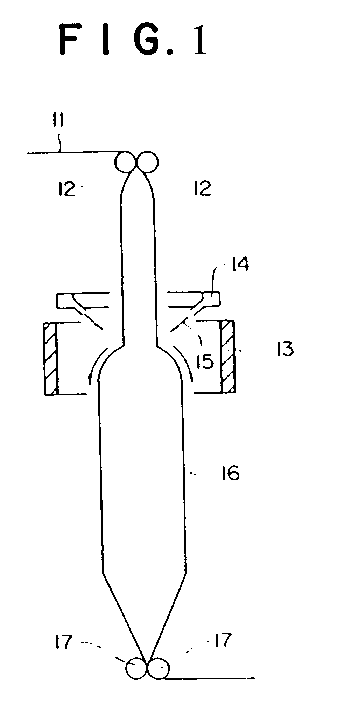

The film manufacture equipment to be used in experimental examples 15-21 is equipped with the following: extruder; biaxially orienting equipment in tubular method (see Figure 1); first heating equipment in Tenter method (see Figure 2); trimming equipment; air intervention equipment; second heating equipment in Tenter method (see Figure 3); and winding machine.

In Figure 1, the raw film 11 is inserted in to the pair of pinch rollers 12 and then heated from the outside by a heater 13 with an air forced into the inside. Near a starting point when the raw film 11 begins to biaxially orient and grow in to a bubble 16, air 15 is blown from an air duct 14. Incidentally, the bubble 16 is continuously drawn into a pair of pinch rollers 17. Through these steps, the simultaneous biaxial orientation is conducted in MD (the direction of movement of the film) and TD (the width direction of the film) directions according to the tubular method.

Next, the production way of the film easy to split which can be obtained in the condition of this experimental example which used this production equipment is explained. Mixture between Ny6 and MXD6 at the weight ratio of 60:40 is fusion kneaded at 270°C in an extruder, dissolved material was extruded from a die with diameter of 90mm as a film in the form of circular cylinder and quickly cooled, and a raw film was made. Next, this raw film was inserted among a pair of pinch rollers and heated the heater while impressing gas inside. At the same time, air was blasted from air ring to expand into air in the beginning of orienting, and the bubble is folded flat through a guide board, and wound by a pair of pinch rollers at lower-stream in order to biaxially orient in the tubular method to the direction of MD and the direction of TD simultaneously. The magnification during this orienting was 3.0 to both directions of MD and TD. Next, this flat film was sent to the first heating equipment, then, the first step heat treatment was given to the film for 5 seconds at 120°C with both side parts kept by the Tenter (see Figure 2). The relaxation ratio of the film at this time was 5%. Next, both side parts of a flat film were cut into two films with a trimming equipment and these films are separated with a roller so that the inner surface contacted an atmosphere. Those are put together again by being passed through rollers with the groove continuously. Next, these films were sent to the second heating equipment, then, the second step heat treatment was given to the film for 10 seconds at 210°C with both side parts kept by the Tenter (see Figure 3). The relaxation ratio of the film at this time was 5%. Next, these films easy to split which were thermally treated were sound with a winding machine. Then, in this experimental example, the fusion condition of the films at the time of the first, second step heat treatments were evaluated. Measurement and an evaluation result for bowing ratio of films after first and second step heat treatments and ease to cut straight of the obtained film at the center part and side part to direction of width are shown in the following Table 6. In the column of fusion, a circle shows no occurrence of fusion, a triangle shows that fusion occurs but it is delaminated with some power, and a cross shows that fusion occurs. The bowing ratio was measured like experimental example 9. The ease to cut straight was evaluated like experimental example 1.

### Experimental examples 15-21

In the above experimental example 14, mixing rate between Ny6 and MXD6 and temperature and relaxation ratio of the first and second step heat treatments are set as in Table 5, a film easy to split which is gotten in the condition of experimental example 15-21 was gotten from a manufacturing process like experimental example 14. Film easy to split which is gotten in condition of each experimental example was also measured and evaluated from fusion conditions, bowing ratio and ease to cut straight, like in the experimental example 14. Those results are shown in Table 6.

### Control examples 11-17

In the above experimental example 87, mixing rate between Ny6 and MXD6 and temperature and relaxation ratio of the first and second step heat treatments are set as in Table 5, a film which is gotten in the condition of control example 11-17 was gotten from a manufacturing process like experimental example 14. Film which is gotten in condition of each control example was also measured and evaluated from fusion conditions, bowing ratio and ease to cut straight, like in the experimental example 14. Those results are shown in Table 6.

### Consideration of the experimental examples 14-20 and the control examples 12-17

According to Tables 5 and 6, production way of film easy to split which is gotten in condition of experimental examples 14-20 shows that there is no fusion of film easy to split occurred in the first step heat treatment and in the second step heat treatment. Also, bowing of a film easy to split after the first step and second step heat treatments is limited to minimum, and it was shown that the ease to cut straight is good in both of the center part and the side part of the film easy to split. On the other hand, control example 12 shows that a fusion of the film occurred at the time of this first step heat treatment since its treatment temperature was beyond the temperature range of this invention. Control example 13 shows that the ease to cut straight was poor at the side part of the film since the relaxation ratio at the time of the second step heat treatment was beyond the range of this invention. Control example 14 shows that fusion occurred during the second step heat treatment and film could not be commercialized, since the second step heat treatment was not properly implemented under the condition in which air was intervened between separated films. Control example 15 shows that bowing of the film after second step heat treatment became big since the temperature during second step heat treatment was beyond the range of this invention. Therefore, the ease to cut straight was poor at side part of the film and the part could not be commercialized. Control example 16 shows that bowing of film after heat treatment became big since the first step heat treatment was not implemented and the step heat treatment wasn't properly implemented under the condition in which air was intervened between separated films. Similarly, the ease to cut straight was poor at side part of the film. Control example 17 shows that because the temperature of first step heat treatment was lower than the temperature range of this invention, fusion of the film occurred during the second step heat treatment, bowing of the film after the heat treatment was big. Similarly, the ease to cut straight was poor at side part of the film. Control example 18 shows that the ease to cut straight was poor at both of the film center part and the side part since the film composition was only nylon 6. The film easy to split which is gotten in the condition of this invention has not only an excellent ease to split and an ease to cut straight, but also is equipped with enough strength. Besides, if the production way of the film easy to split which is gotten in the condition of this invention is used, these characteristics of a film easy to split can be favourably obtained.

**Table 1**

| | Raw material composition | | Heating (°C) | | Stability of bubble | 1st step treatment | | 2nd step treatment | |
|---|---|---|---|---|---|---|---|---|---|
| | Ny6 | MXD6 | Sides parts width direction | Products | | temperature (°C) | Relaxation ratio (%) | temperature (°C) | Relaxation ratio (%) |
| Ex. 1 | 60 | 40 | 280 | 320 | ○ | 150 | 5 | 210 | 5 |
| Ex. 2 | 60 | 40 | 260 | 340 | ○ | 150 | 5 | 210 | 5 |
| Ex. 3 | 60 | 40 | 240 | 360 | ○ | 150 | 5 | 210 | 5 |
| Ex. 4 | 60 | 40 | 220 | 380 | ○ | 150 | 5 | 210 | 5 |
| Ex. 5 | 60 | 40 | 200 | 400 | ○ | 150 | 5 | 210 | 5 |
| Ex. 6 | 60 | 40 | 240 | 360 | ○ | 100 | 5 | 210 | 5 |
| Ex. 7 | 60 | 40 | 240 | 360 | ○ | 120 | 5 | 210 | 5 |
| Cont. 1 | 60 | 40 | 320 | 280 | ○ | 150 | 5 | 210 | 5 |
| Cont. 2 | 60 | 40 | 340 | 260 | ○ | 150 | 5 | 210 | 5 |
| Cont. 3 | 60 | 40 | 180 | 420 | × | 150 | 5 | 210 | 5 |
| Cont. 4 | 100 | - | 260 | 340 | ○ | 150 | 5 | 210 | 5 |
| Cont. 5 | 100 | - | 240 | 360 | ○ | 150 | 5 | 210 | 5 |
| Cont. 6 | 100 | - | 300 | 300 | ○ | 150 | 5 | 210 | 5 |

**Table 2**

| | Bowing ratio (%) | | Ease to cut straight (mm) | | cut evaluation | Total evaluation |
|---|---|---|---|---|---|---|
| | After oriented | Heating treatment | cetral portion | side portion | | |
| Ex. 1 | -0.6 | 4.8 | 1 ⓞ | 6 ○ | ⓞ | ⓞ |
| Ex. 2 | -1.1 | 4.3 | 1 ⓞ | 5 ○ | ⓞ | ⓞ |
| Ex. 3 | -1.5 | 4.0 | 0 ⓞ | 4 ○ | ⓞ | ⓞ |
| Ex. 4 | -2.1 | 3.4 | 0 ⓞ | 3 ○ | ⓞ | ⓞ |
| Ex. 5 | -2.4 | 3.0 | 0 ⓞ | 2 ⓞ | ⓞ | ⓞ |
| Ex. 6 | -1.5 | 4.4 | 1 ⓞ | 3 ○ | ⓞ | ⓞ |
| Ex. 7 | -1.5 | 4.2 | 0 ⓞ | 3 ○ | ⓞ | ⓞ |
| Cont. 1 | +0.5 | 6.0 | 2 ⓞ | 11 × | Δ | × |
| Cont. 2 | +1.1 | 6.6 | 2 ⓞ | 14 × | Δ | × |
| Cont. 3 | -2.6 | 2.9 | 0 ⓞ | 2 ⓞ | ⓞ | × |
| Cont. 4 | -1.0 | 4.5 | 26 × | 38 × | × | × |
| Cont. 5 | -1.4 | 4.1 | 22 × | 33 × | × | × |
| Cont. 6 | 0 | 5.5 | 29 × | 41 × | × | × |

**Table 3**

| | Raw material composition | | 1st step treatment | | Stability of bubble | 2st step treatment | | Fusion |
|---|---|---|---|---|---|---|---|---|
| | Ny6 | MXD6 | temperature (°C) | Relaxation ratio (%) | | temperature (°C) | Relaxation ratio (%) | |
| Ex. 8 | 60 | 40 | 120 | 0 | ○ | 210 | 10 | ○ |
| Ex. 9 | 60 | 40 | 150 | 0 | ○ | 210 | 10 | ○ |
| Ex. 10 | 60 | 40 | 180 | 0 | ○ | 210 | 10 | ○ |
| Ex. 11 | 60 | 40 | 180 | 5 | ○ | 210 | 5 | ○ |
| Ex. 12 | 80 | 20 | 180 | 0 | ○ | 210 | 10 | ○ |
| Ex. 13 | 40 | 60 | 180 | 0 | ○ | 210 | 10 | ○ |
| Cont. 7 | 60 | 40 | 200 | 0 | × | 210 | 10 | ○ |
| Cont. 8 | 60 | 40 | - | - | - | 210 | 10 | × |
| Cont. 9 | 60 | 40 | - | - | - | 210 | 5 | × |
| Cont. 10 | 100 | - | 180 | 0 | ○ | 210 | 10 | ○ |
| Cont. 11 | 100 | - | 150 | 0 | ○ | 210 | 10 | ○ |

**Table 4**

| | Bowing ratio (%) | | Ease to cut straight (mm) | | cut evaluation | Total evaluation |
|---|---|---|---|---|---|---|
| | 1st step | 1st step | cetral portion | side portion | | |
| Ex. 8 | 0 | 4.9 | 1 ⓞ | 5 ○ | ⓞ | ⓞ |
| Ex. 9 | 0 | 4.5 | 0 ⓞ | 4 ○ | ⓞ | ⓞ |
| Ex. 10 | 0 | 3.9 | 0 ⓞ | 3 ○ | ⓞ | ⓞ |
| Ex. 11 | 0 | 3.4 | 0 ⓞ | 2 ⓞ | ⓞ | ⓞ |
| Ex. 12 | 0 | 4.0 | 1 ⓞ | 4 ○ | ⓞ | ⓞ |
| Ex. 13 | 0 | 3.9 | 1 ⓞ | 3 ○ | ⓞ | ⓞ |
| Cont. 7 | 0 | 6.0 | 0 ⓞ | 2 ⓞ | ⓞ | × |
| Cont. 8 | - | 9.7 | 2 ⓞ | 15 × | Δ | × |
| Cont. 9 | - | 8.2 | 2 ⓞ | 12 × | Δ | × |
| Cont. 10 | 0 | 4.2 | 24 × | 35 × | × | × |
| Cont. 11 | 0 | 3.8 | 20 × | 31 × | × | × |

**Table 5**

| | Raw terial composition | | 1st step reatment | | air intervention | 2st step reatment | |
|---|---|---|---|---|---|---|---|
| | Ny6 | MXD6 | temperature (°C) | Relaxation ratio (%) | separation | temperature (°C) | Relaxation ratio (%) |
| Ex. 14 | 60 | 40 | 120 | 5 | Presence | 210 | 5 |
| Ex. 15 | 60 | 40 | 150 | 5 | Presence | 210 | 5 |
| Ex. 16 | 60 | 40 | 180 | 5 | Presence | 210 | 5 |
| Ex. 17 | 60 | 40 | 150 | 0 | Presence | 210 | 5 |
| Ex. 18 | 60 | 40 | 150 | 5 | Presence | 210 | 10 |
| Ex. 19 | 60 | 40 | 150 | 5 | Presence | 210 | 15 |
| Ex. 20 | 80 | 20 | 150 | 5 | Presence | 210 | 5 |
| Cont. 12 | 60 | 40 | 200 | 5 | - | 210 | 5 |
| Cont. 13 | 60 | 40 | 150 | 5 | Presence | 210 | 20 |
| Cont. 14 | 60 | 40 | 150 | 5 | Non-presence | 210 | 5 |
| Cont. 15 | 60 | 40 | 150 | 5 | Presence | 225 | 5 |
| Cont. 16 | 60 | 40 | - | - | Non-presence | 210 | 5 |
| Cont. 17 | 60 | 40 | 80 | 5 | Presence | 210 | 5 |
| Cont. 18 | 100 | - | 150 | 5 | Presence | 210 | 5 |

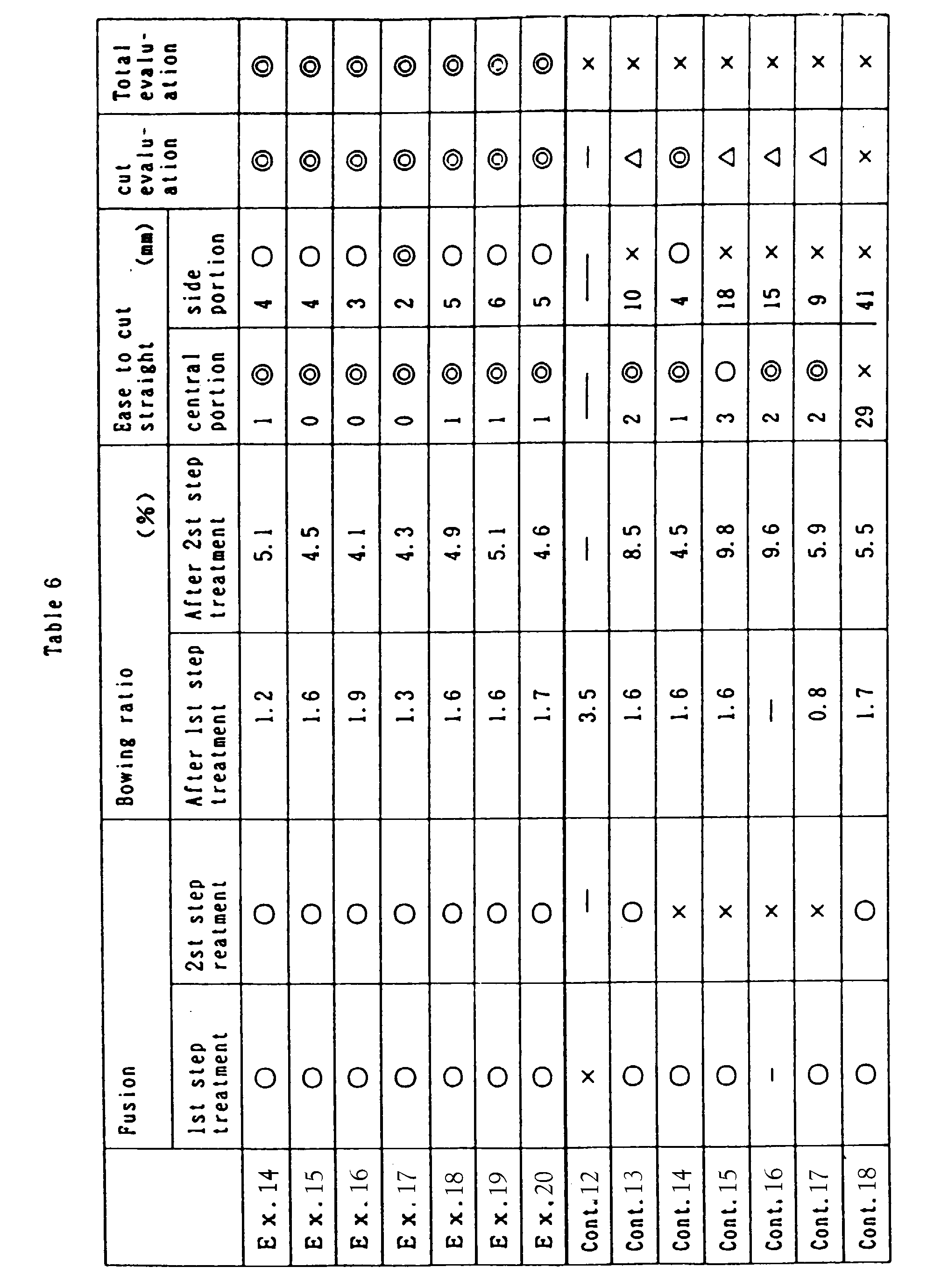

## Claims

1. A method of producing a biaxially oriented film easy to split, the method comprising the steps of dissolving a raw material mixture which contains nylon (Ny) and poly metaxylylene adipamide (MXD6) in the weight ratio of 40-85:60-15; extruding from an extruder to obtain a raw film (11); orienting biaxially the raw film in the MD and TD directions with magnification of more than 2.8 times by means of the tubular method; folding the film flat; and subjecting the film to thermal treatment, the thermal treatment comprising a first thermal treatment step implemented at a temperature of 120 to 190°C by the tubular method, and a second thermal treatment step implemented at a temperature of 190 to 220°C based on the Tenter method, wherein the step of biaxially orienting is conducted in a condition such that the heating temperature of the side part in the width direction (11X, 11Y) when the biaxially oriented raw film is folded flat is controlled along the direction of the circumference of the raw film so as to be lower than the heating temperature of another part of the film which is used later in a product.

2. A method of producing a biaxially oriented film easy to split, the method comprising the steps of dissolving a raw material mixture which contains nylon (Ny) and poly metaxylylene adipamide (MXD6) in the weight ratio of 40-85:60-15; extruding from an extruder to obtain a raw film (11); orienting biaxially the raw film in the MD and TD directions with magnification of more than 2.8 times by means of the tubular method; folding the film flat; and subjecting the film to thermal treatment, the thermal treatment comprising a first thermal treatment step implemented at a temperature of 120 to 190°C and a relaxation ratio of 15% or less based on the Tenter method; a step to cut both side parts of the flat film into two films; and a second thermal treatment step implemented at a temperature of 190 to 220°C and a relaxation ratio of 15% or less based on the Tenter method while air intervenes between the two films, wherein the step of biaxially orienting is conducted in a condition such that the heating temperature of the side part in the width direction (11X, 11Y) when the biaxially oriented raw film is folded flat is controlled along the direction of the circumference of the raw film so as to be lower than the heating temperature of another part of the film which is used later in a product.

3. A method according to claim 1 or claim 2, wherein prior to extruding the method further comprises dissolving and kneading the raw material mixture at a temperature of 300°C or less.

4. A method according to any preceding claim, wherein the temperature of a heater used to heat the side part is 10-100°C lower than an average temperature of all heaters used to heat the film.

5. A method according to any of claims 1 to 3, wherein the temperature of a heater used to heat the other part is 10-100°C higher than an average temperature of all heaters used to heat the film.

6. A method according to any of claims 1 to 3, wherein a heating temperature at the side part of the film in the width direction when the raw film is folded is a minimum and a heating temperature at a centre part of the said another part is a maximum.

## Patentansprüche

1. Verfahren zum Herstellen einer biaxial orientierten leicht trennbaren Folie wobei das Verfahren die folgenden Schritte umfaßt: Auflösen einer Nylon (Ny) und Polymetaxylylenadipamid (MXD6) im Gewichtsverhältnis von 40-85:60-15 enthaltenden Ausgangsmaterialmischung; Extrudieren aus einem Extruder, um eine unbehandelte Folie (11) zu erhalten; biaxiales Orientieren der unbehandelten Folie in den MD- und TD-Richtungen mit einer Vergrößerung von mehr als 2,8 mittels des Schlauchfolienverfahrens; Zusammenfalten der Folie; Wärmebehandeln der Folie, wobei die Wärmebehandlung einen ersten Wärmebehandlungsschritt umfaßt, der bei einer Temperatur von 120 bis 190°C mittels des Schlauchfolienverfahrens durchgeführt wird, und einen zweiten Wärmebehandlungsschritt, der bei einer Temperatur von 190 bis 220°C mit dem Spannrahmenverfahren (Tenterverfahren) durchgeführt wird, wobei der Schritt des biaxialen Orientierens in einem Zustand durchgeführt wird, bei dem die Heiztemperatur des Seitenteils in Querrichtung (11X, 11Y) dann, wenn die biaxial orientierte unbehandelte Folie längs der Umfangsrichtung der unbehandelten Folie flach gefaltet ist, so eingestellt wird, daß sie geringer ist als die Heiztemperatur eines anderen Teils der Folie, welcher später in einem Erzeugnis verwendet wird.

2. Verfahren zum Herstellen einer biaxial orientierten leicht trennbaren Folie, wobei das Verfahren die folgenden Schritte umfaßt: Auflösen einer Nylon (Ny) und Polymetaxylylenadipamid (MXD6) im Gewichtsverhältnis von 40-85:60-15 enthaltenden Ausgangsmaterialmischung; Extrudieren aus einem Extruder, um eine unbehandelte Folie (11) zu erhalten; biaxiales Orientieren der unbehandelten Folie in der MD- und TD-Richtung mit einer Vergrößerung von mehr als 2,8 aufgrund des Schlauchfolienverfahrens; Zusammenfalten der Folie; Wärmebehandeln der Folie, wobei die Wärmebehandlung einen ersten Wärmebehandlungsschritt umfaßt, der bei einer Temperatur von 120 bis 190°C und einem Relaxationsverhältnis von 15% oder weniger mit dem Spannrahmenverfahren (Tenterverfahren) durchgeführt wird, einen Schritt zum Trennen der beiden Seitenteile der flachen Folie in zwei Folien, und eine zweiten Wärmebehandlungsschritt, der bei einer Temperatur von 190 bis 220°C und einem Relaxationsverhältnis von 15% oder weniger mit dem Spannrahmenverfahren (Tenterverfahren) durchgeführt wird, während Luft zwischen die beiden Folien eintritt; wobei der Schritt des biaxialen Orientierens bei einem Zustand durchgeführt wird, bei welchem die Heiztemperatur des Seitenteils in Querrichtung (11X, 11Y) dann, wenn die biaxial orientierte unbehandelte Folie längs der Umfangsrichtung der unbehandelten Folie flach gefaltet ist, so eingestellt wird, daß sie geringer ist als die Heiztemperatur eines anderen Teils der Folie, welcher später in einem Erzeugnis verwendet wird.

3. Verfahren nach Anspruch 1 oder 2, wobei das Verfahren vor dem Extrudieren weiterhin das Auflösen und Kneten der Ausgangsmaterialmischung bei einer Temperatur von 300°C oder weniger umfaßt.

4. Verfahren nach einem der vorhergehenden Ansprüche, wobei die Temperatur einer zum Heizen des Seitenteils verwendeten Heizvorrichtung 10 bis 100°C niedriger ist als die Durchschnittstemperatur aller Heizvorrichtungen zum Erwärmen der Folie.

5. Verfahren nach einem der Ansprüche 1 bis 3, wobei die Temperatur einer zum Heizen des anderen Teils verwendeten Heizvorrichtung 10 bis 100°C höher ist als die Durchschnittstemperatur aller Heizvorrichtungen zum Erwärmen der Folie.

6. Verfahren nach einem der Ansprüche 1 bis 3, wobei die Heiztemperatur in einem Seitenteil der Folie in Querrichtung, wenn die unbehandelte Folie gefaltet ist, ein Minimum ist, und eine Heiztemperatur an einem mittigen Teil des anderen Teils ein Maximum ist.

## Revendications

1. Procédé de fabrication d'un film orienté biaxialement facilement déchirable, le procédé comprenant les étapes consistant à dissoudre un mélange de matières premières qui contient du nylon (Ny) et du poly(métaxylylèneadipamide)) (MXD6) dans un rapport en poids de 40-85:60-15 ; à l'extruder par une extrudeuse pour obtenir un film brut (11) ; à orienter biaxialement le film brut dans les directions MD et TD avec une amplitude supérieure à 2,8 par le procédé tubulaire ; à plier le film à plat ; et à soumettre le film à un traitement thermique, le traitement thermique comprenant une première étape de traitement thermique réalisée à une température de 120 à 190°C par le procédé tubulaire, et une deuxième étape de traitement thermique réalisée à une température de 190 à 220°C selon le procédé au banc d'étirage, dans lequel l'étape d'orientation biaxiale est réalisée dans des conditions où la température de chauffage de la partie latérale dans le sens de la largeur (11X, 11Y) lorsque le film brut orienté biaxialement est plié à plat est contrôlée dans la direction de la circonférence du film brut de façon à être inférieure à la température de chauffage d'une autre partie du film qui est utilisée par la suite comme produit.

2. Procédé de fabrication d'un film orienté biaxialement facilement déchirable, le procédé comprenant les étapes consistant à dissoudre un mélange de matières premières qui contient du nylon (Ny) et du poly(métaxylylèneadipamide)) (MXD6) dans un rapport en poids de 40-85:60-15 ; à l'extruder par une extrudeuse pour obtenir un film brut (11) ; à orienter biaxialement le film brut dans les directions MD et TD avec une amplitude supérieure à 2,8 par le procédé tubulaire ; à plier le film à plat ; et à soumettre le film à un traitement thermique, le traitement thermique comprenant une première étape de traitement thermique réalisée à une température de 120 à 190°C et à un taux de relâchement de 15% ou moins par le procédé au banc d'étirage ; une étape de découpe des deux parties latérales du film plat en deux films ; et une deuxième étape de traitement thermique réalisée à une température de 190 à 220°C et à un taux de relâchement de 15% ou moins selon le procédé au banc d'étirage pendant que de l'air est insufflé entre les deux films, dans lequel l'étape d'orientation biaxiale est réalisée dans des conditions où la température de chauffage de la partie latérale dans le sens de la largeur (11X, 11Y) lorsque le film brut orienté biaxialement est plié à plat est contrôlée dans la direction de la circonférence du film brut de façon à être inférieure à la température de chauffage d'une autre partie du film qui est utilisée par la suite comme produit.

3. Procédé selon l'une des revendications 1 ou 2 dans lequel, avant l'extrusion, le procédé comprend en outre la dissolution et le pétrissage du mélange de matières premières à une température de 300°C ou moins.

4. Procédé selon l'une quelconque des revendications précédentes, dans lequel la température du dispositif de chauffage utilisé pour chauffer la partie latérale est inférieure de 10-100°C à la température moyenne de tous les dispositifs de chauffage utilisés pour chauffer le film.

5. Procédé selon l'une quelconque des revendications 1 à 3, dans lequel la température du dispositif de chauffage utilisé pour chauffer l'autre partie est supérieure de 10-100°C à la température moyenne de tous les dispositifs de chauffage utilisés pour chauffer le film.

6. Procédé selon l'une quelconque des revendications 1 à 3, dans lequel la température de chauffage de la partie latérale du film dans le sens de la largeur lorsque le film est plié est un minimum, et la température de chauffage de la partie centrale de ladite autre partie est un maximum.
